(19) Europäisches Patentamt
European Patent Office
Office européen des brevets

(11) **EP 3 644 757 B1**

(12) **EUROPEAN PATENT SPECIFICATION**

(45) Date of publication and mention
of the grant of the patent:
**25.03.2026 Bulletin 2026/13**

(21) Application number: **18732120.3**

(22) Date of filing: **26.06.2018**

(51) International Patent Classification (IPC):
*A23L 2/385* (2006.01)    *A23L 27/00* (2016.01)

(52) Cooperative Patent Classification (CPC):
**A23L 2/385; A23L 2/56; C12C 5/026**

(86) International application number:
**PCT/EP2018/067042**

(87) International publication number:
**WO 2019/002251 (03.01.2019 Gazette 2019/01)**

(54) **FLAVOR COMPOSITIONS**

GESCHMACKSZUSAMMENSETZUNGEN

COMPOSITIONS D'ARÔMES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2017 US 201762524722 P
25.10.2017 EP 17198375**

(43) Date of publication of application:
**06.05.2020 Bulletin 2020/19**

(73) Proprietor: **Firmenich SA
1242 Satigny (CH)**

(72) Inventors:
• **BOUQUERAND, Pierre-Etienne
1211 Geneva 8 (CH)**
• **NORMAND, Valery
Plainsboro
New Jersey 08530 (US)**

(74) Representative: **Strych, Sebastian et al
Mitscherlich PartmbB
Karlstraße 7
80333 München (DE)**

(56) References cited:
**WO-A2-2006/102435        CA-A1- 2 748 983
US-A1- 2013 040 036**

• **DATABASE GNPD [online] MINTEL; July 2010
(2010-07-01), ANONYMOUS: "Mint bitters",
XP002777446, Database accession no. 1362127**
• **DATABASE GNPD [online] MINTEL; July 2016
(2016-07-01), ANONYMOUS: "Sarsaparilla
Drink", XP002777447, Database accession no.
4151145**
• **DATABASE GNPD [online] MINTEL; August 2013
(2013-08-01), ANONYMOUS: "Pina Colada Drink
Mix", XP002777448, Database accession no.
2145443**
• **DATABASE GNPD [online] MINTEL; June 2014
(2014-06-01), ANONYMOUS: "cookies and creme
flavored intense milk flavoring straws and pods",
XP002777449, Database accession no. 2477329**

## Description

### FIELD

The present disclosure relates to flavour compositions. In particular, the present disclosure relates to flavour compositions that a person may dispense into beverages, such as, for example, bottled beverages. The invention is defined by the appended claims 1-13.

### BACKGROUND

There are many circumstances in which it can be desirable to add an additive, such as, for example a flavoring substance, to a primary liquid. One example is in the field of flavored beverages, such as, for example, beers and ciders. Typically, the addition of a flavoring substance occurs when the beverage is produced. This limits consumer choice and potentially limits the revenue available for the drinks producer.

Consequently, it is desirable to offer increased consumer choice by allowing a standard beverage, alcoholic or non-alcoholic, to be flavored with a flavoring substance, or otherwise altered by the addition of an additive, at the point of serve according to the preference of an individual consumer.

The product "Mint Bitters" from Fee Brothers, sold in the USA from July 2010, according to the Database Mintel (see its ID 136127) is a composition comprising propylene glycol, ethyl alcohol, water, glycerol, peppermint oil, yellow 5 and blue 1.

### SUMMARY

One aspect provides a composition,

wherein the composition is a liquid,
wherein the composition is configured to disperse in a beverage without requiring agitation, the composition comprising:

a) from 0 to 30% w/w water;
b) from 15 to 40% w/w glycerol;
c) from 10 to 40% w/w propylene glycol;
d) from 30 to 50% w/w of ethanol; and
e) from 0.5 to 15% w/w of a flavoring substance,

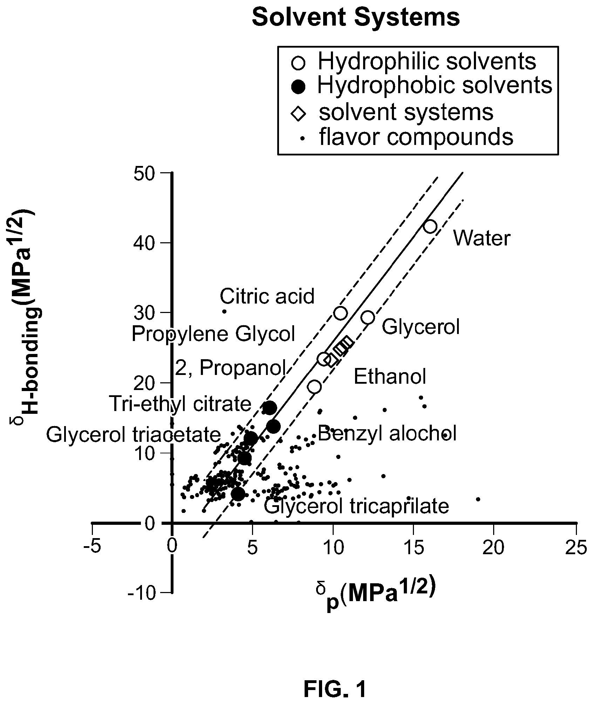

wherein the flavoring substance refers to an additive that imparts a particular taste to a beverage, wherein the taste is selected from the group consisting of malt, coffee, chocolate, pineapple, coconut, mint, citrus and savory flavors, and

wherein the flavoring substance is selected according to its $\delta p$ and $\delta h$ values, wherein the $\delta p$ and $\delta h$ values are defined by the following coordinates in the graph shown in Figure 1: A(6,0), B(0,6), C(5,20) and D(12,15).

In one aspect, the composition further comprises 1 to 5% w/w glycosylated steviol glycoside.
In one aspect, the amount of glycosylated steviol glycoside in the composition is from 2 to 3% w/w.
In one aspect, the composition further comprises 0 to 1.5% w/w sucralose.
In one aspect, the amount of water in the composition is from 7 to 10% w/w.
In one aspect, the amount of glycerol in the composition is from 20 to 35% w/w.
In one aspect, the amount of propylene glycol in the composition is from 17 to 35% w/w.
In one aspect, the amount of the alcohol in the composition is from 30 to 42% w/w.
In one aspect, the beverage is a carbonated beverage.
In one aspect, the carbonated beverage is beer.
In one aspect, the beverage is in a single serve container.
In one aspect, the concentration of propylene glycol, when added to the beverage, does not exceed 1000 ppm.
In one aspect, the composition is packaged.
In one aspect, the composition is packaged in an amount sufficient to flavor the beverage in a single serve container.
One aspect provides a system,
wherein the system dispenses the composition according any of claim 1-12 into a liquid in a container, the system comprising:

a) a support structure;

b) a container holder for holding a container containing a liquid, the container holder being supported by the support structure;

c) a capsule containing the composition according to any of claims 1-12;

d) a capsule holder for holding the capsule containing a composition according to some aspects presented herein; and

e) a manipulator device operable to manipulate the capsule to dispense the additive into the container.

## BRIEF DESCRIPTION OF THE FIGURES

Figure 1 shows the Hansen solubility parameters for the components of the solvent system for the composition according to certain aspects presented herein.

Figure 2 shows the Hansen solubility parameters for the components of a composition according to certain aspects presented herein.

Figure 3 shows the Hansen solubility parameters for the components of a composition according to certain aspects presented herein.

Figure 4 shows the Hansen solubility parameters for the components of a composition according to certain aspects presented herein.

Figure 5 shows the Hansen solubility parameters for the components of a composition according to certain aspects presented herein.

Figure 6 shows the Hansen solubility parameters for the components of a composition according to certain aspects presented herein.

Figure 7 shows the dispersion of a composition according to certain aspects presented herein in a beverage, compared with the dispersion of syrup or oil in a beverage.

Figure 8 shows the dispersion of a composition according to certain aspects presented herein in beer, compared with the dispersion of syrup or oil in beer.

## DETAILED DESCRIPTION

The present disclosure relates to flavour compositions. In particular, the present disclosure relates to flavour compositions that may be dispensed into beverages, such as, for example, bottled beverages.

*The Composition:* Without intending to be limited to any particular theory, the compositions disclosed herein provide a solvent system that (i) solubilizes the flavoring substance and (ii) is compatible with the beverage, namely, the flavoring substance remains in solution when the composition is added to a beverage, where the major solvent is water.

In some aspects, the components of the solvent system are selected according to their Hansen solubility parameters. Hansen solubility parameters may be used to predict if one material will dissolve in another and form a solution. A molecule is assigned three Hansen solubility parameters:

- $\delta_d$: The energy from dispersion forces between molecules;

- $\delta_p$: The energy from dipolar intermolecular force between molecules; and

- $\delta_h$: The energy from hydrogen bonds between molecules.

The Hansen solubility parameters can be treated as co-ordinates for a point in three dimensions also known as the Hansen space. The nearer two molecules are in the Hansen space, the more likely they are to dissolve into each other.

In some aspects, the components of the solvent system are selected according to their $\delta_p$ and $\delta_h$ values. Referring to Figure 1, in some aspects, the Hansen solubility parameters of the components of the solvent system of the compositions disclosed herein are aligned along a line defined by Equation 1:

$$\delta_h = 3\,\delta_p - 4\ (+/-\ 4) - \textit{Equation 1}$$

The components of the solvent system may be hydrophobic, or hydrophilic. Examples of components of the solvent system include, but are not limited to: benzyl alcohol, glycerol triacetate, isopropyl alcohol, tri-ethyl citrate, 2-propanol, ethanol, propylene glycol, glycerol, citric acid, and the like.

Accordingly, a composition is provided,

wherein the composition is a liquid,
wherein the composition is configured to disperse in a beverage without requiring agitation, the composition comprising:

a) from 0 to 30% w/w water;
b) from 15 to 40% w/w glycerol;
c) from 10 to 40% w/w propylene glycol;
d) from 30 to 50% w/w of ethanol; and
e) from 0.5 to 15% w/w of a flavoring substance,

wherein the flavoring substance refers to an additive that imparts a particular taste to a beverage, wherein the taste is selected from the group consisting of malt, coffee, chocolate, pineapple, coconut, mint, citrus and savory flavors, and

wherein the flavoring substance is selected according to its $\delta$p and $\delta$h values, wherein the $\delta$p and $\delta$h values are defined by the following coordinates in the graph shown in Figure 1: A(6,0), B(0,6), C(5,20) and D(12,15).

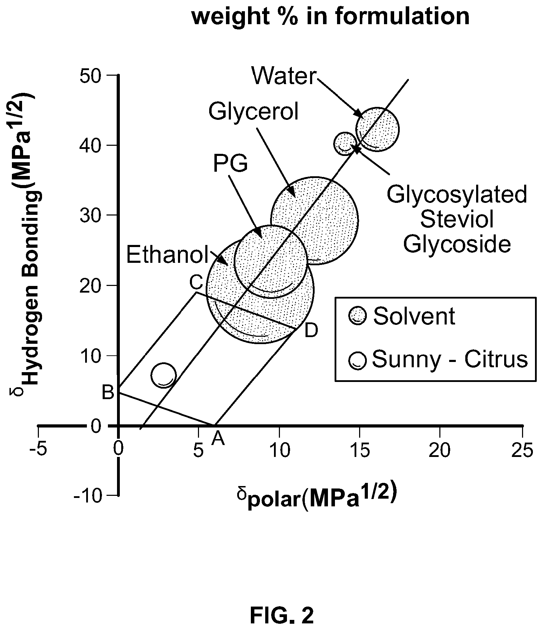

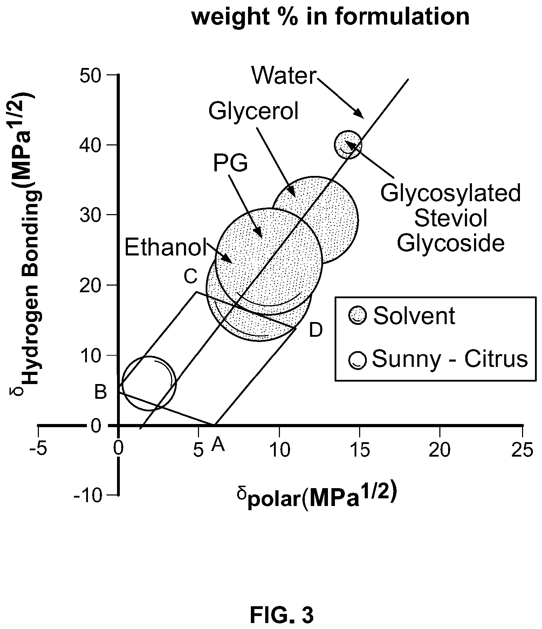

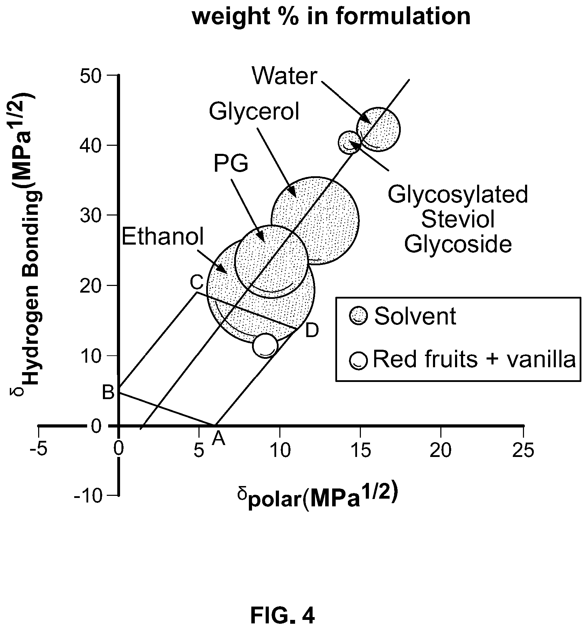

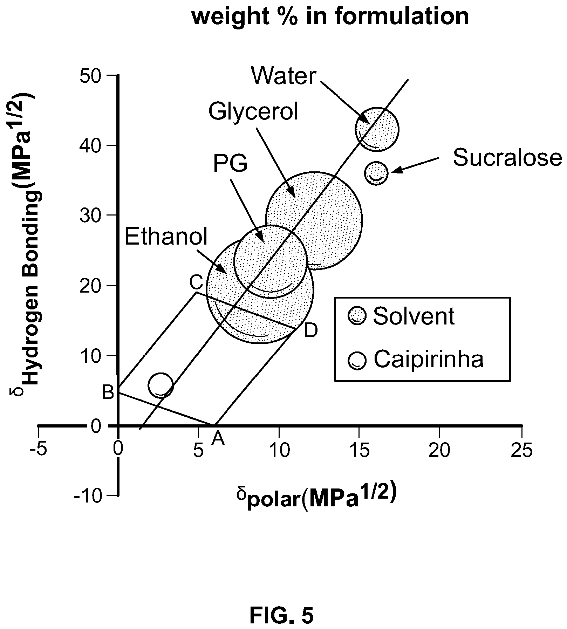

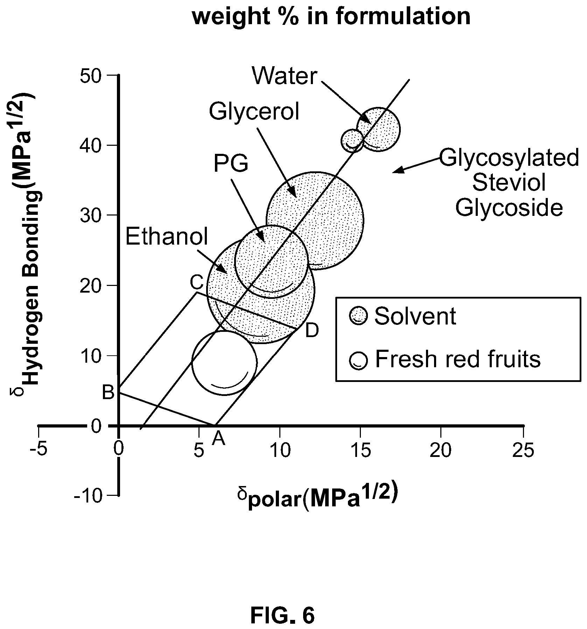

Referring to Figures 2 to 6, (showing the Hansen solubility parameters for the components of compositions according to certain aspects presented herein) the Hansen space for the flavoring substance is separate from the Hansen space for the water solvent of the beverage. Consequently, the flavoring substance is less likely to dissolve in the water.

Without intending to be limited to any particular theory, the alcohol component of the solvent system solubilizes the flavoring substance, and the glycerol/ propylene glycol component of the solvent system ensures that the solubilized flavoring substance remains solubilized in the water solvent of the beverage. Referring to Figures 2 to 6, the Hansen space of the combined solvent system and flavoring substance of the compositions disclosed herein is closer to the Hansen space for the water solvent of the beverage. Consequently, the flavoring substance is more likely to dissolve in the water.

The flavoring substance is selected according to its $\delta_p$ and $\delta_h$ values, wherein the $\delta_p$ and $\delta_h$ values are defined by the following coordinates in the graph shown in Figure 1: A(6,0), B(0,6), C(5, 20) and D(12,15).

The amount of water in the composition is from 0 to 30% w/w. In some aspects, the amount of water in the composition is from 0 to 25% w/w. In some aspects, the amount of water in the composition is from 0 to 20% w/w. In some aspects, the amount of water in the composition is from 0 to 15% w/w. In some aspects, the amount of water in the composition is from 0 to 10% w/w. In some aspects, the amount of water in the composition is from 0 to 5% w/w. In some aspects, the amount of water in the composition is from 0 to 4% w/w. In some aspects, the amount of water in the composition is from 0 to 3% w/w. In some aspects, the amount of water in the composition is from 0 to 2% w/w. In some aspects, the amount of water in the composition is from 0 to 1% w/w.

The amount of water in the composition is from 0 to 30% w/w. In some aspects, the amount of water in the composition is from 1 to 30% w/w. In some aspects, the amount of water in the composition is from 2 to 30% w/w. In some aspects, the amount of water in the composition is from 3 to 30% w/w. In some aspects, the amount of water in the composition is from 4 to 30% w/w. In some aspects, the amount of water in the composition is from 5 to 30% w/w. In some aspects, the amount of water in the composition is from 10 to 30% w/w. In some aspects, the amount of water in the composition is from 15 to 30% w/w. In some aspects, the amount of water in the composition is from 20 to 30% w/w. In some aspects, the amount of water in the composition is from 25 to 30% w/w.

In some aspects, the amount of water in the composition is from 7 to 10% w/w.

In some aspects, the amount of water in the composition is 7, or 8, or 9, or 10% w/w.

The amount of glycerol in the composition is from 15 to 40% w/w. In some aspects, the amount of glycerol in the composition is from 15 to 35% w/w. In some aspects, the amount of glycerol in the composition is from 15 to 30% w/w. In some aspects, the amount of glycerol in the composition is from 15 to 25% w/w. In some aspects, the amount of glycerol in the composition is from 15 to 20% w/w.

The amount of glycerol in the composition is from 15 to 40% w/w. In some aspects, the amount of glycerol in the composition is from 20 to 40% w/w. In some aspects, the amount of glycerol in the composition is from 25 to 40% w/w. In some aspects, the amount of glycerol in the composition is from 30 to 40% w/w. In some aspects, the amount of glycerol in the composition is from 35 to 40% w/w.

In some aspects, the amount of glycerol in the composition is from 20 to 35% w/w.

In some aspects, the amount of glycerol in the composition is 20, or 21, or 22, or 23, or 24, or 25, or 26, or 27, or 28, or 29, or 30, or 31, or 32, or 33, or 34, or 35% w/w.

The amount of propylene glycol in the composition is from 10 to 40% w/w. In some aspects, the amount of propylene glycol in the composition is from 10 to 35% w/w. In some aspects, the amount of propylene glycol in the composition is from 10 to 30% w/w. In some aspects, the amount of propylene glycol in the composition is from 10 to 25% w/w. In some aspects, the amount of propylene glycol in the composition is from 10 to 20% w/w. In some aspects, the amount of propylene glycol in the composition is from 10 to 15% w/w.

In some aspects, the amount of propylene glycol in the composition is from 15 to 40% w/w. In some aspects, the amount of propylene glycol in the composition is from 20 to 40% w/w. In some aspects, the amount of propylene glycol in the composition is from 25 to 40% w/w. In some aspects, the amount of propylene glycol in the composition is from 30 to 40% w/w. In some aspects, the amount of propylene glycol in the composition is from 35 to 40% w/w.

In some aspects, the amount of propylene glycol in the composition is from 17 to 35% w/w.

In some aspects, the amount of propylene glycol in the composition is 17, or 18, or 19, or 20, or 21, or 22, or 23, or 24, or 25, or 26, or 27, or 28, or 29, or 30, or 31, or 32, or 33, or 34, or 35% w/w.

The amount of the alcohol in the composition is from 30 to 50% w/w. In some aspects, the amount of the alcohol in the composition is from 30 to 45% w/w. In some aspects, the amount of the alcohol in the composition is from 30 to 40% w/w. In some aspects, the amount of the alcohol in the composition is from 30 to 35% w/w.

In some aspects, the amount of the alcohol in the composition is from 35 to 50% w/w. In some aspects, the amount of the alcohol in the composition is from 40 to 50% w/w. In some aspects, the amount of the alcohol in the composition is from 45 to 50% w/w.

In some aspects, the amount of the alcohol in the composition is from 30 to 42% w/w.

In some aspects, the amount of the alcohol in the composition is 30, or 31, or 32, or 33, or 34, or 35, or 36, or 37, or 38, or 39, or 40, or 41, or 42% w/w.

Not according to the invention and present for illustration purpose only is that the alcohol may be selected from the group consisting of: ethanol, isopropyl alcohol, propan-1-ol, propan-2-ol, butan-1-ol, and butan-2-ol.

The alcohol is ethanol. In aspects where the alcohol is ethanol, the composition is configured such that the total alcohol content of the beverage does not increase significantly when the composition is added.

In some aspects, the beverage is selected from the group consisting of: soda, beer, hard lemonade, spirits, and "alco-pops".

In some aspects, the beverage is a carbonated beverage.

In some aspects, the carbonated beverage is beer.

In some aspects, the beverage is in a single serve container. Examples of single serve containers include, but are not limited to a soda can, a beer can, a 33 cl bottle, a 50 cl bottle, and the like.

In some aspects, the volume of the beverage is 33 cl. Alternatively, in some aspects, the volume of the beverage is 50 cl.

In some aspects, the composition is packaged.

In some aspects, the composition is packaged in an amount sufficient to flavor the beverage in a single serve container.

In some aspects, the volume of the composition that is added to the beverage is (i) a volume that is large enough that is easy for a user to dispense accurately, and (ii) small enough that does not dilute the beverage in an amount that is noticed by the user.

Accordingly, in some aspects, the volume of the composition added to the beverage is 0.5 to 17 ml. In some aspects, the volume of the composition added to the beverage is 1 to 17 ml. In some aspects, the volume of the composition added to the beverage is 1.5 to 17 ml. In some aspects, the volume of the composition added to the beverage is 2 to 17 ml. In some aspects, the volume of the composition added to the beverage is 2.5 to 17 ml. In some aspects, the volume of the composition added to the beverage is 3 to 17 ml. In some aspects, the volume of the composition added to the beverage is 3.5 to 17 ml. In some aspects, the volume of the composition added to the beverage is 4 to 17 ml. In some aspects, the volume of the composition added to the beverage is 4.5 to 17 ml. In some aspects, the volume of the composition added to the beverage is 5 to 17 ml. In some aspects, the volume of the composition added to the beverage is 5.5 to 17 ml. In some aspects, the volume of the composition added to the beverage is 6 to 17 ml. In some aspects, the volume of the composition added to the beverage is 6.5 to 17 ml. In some aspects, the volume of the composition added to the beverage is 7 to 17 ml. In some aspects, the volume of the composition added to the beverage is 7.5 to 17 ml. In some aspects, the volume of the composition added to the beverage is 8 to 17 ml. In some aspects, the volume of the composition added to the beverage is 8.5 to 17 ml. In some aspects, the volume of the composition added to the beverage is 9 to 17 ml. In some aspects, the volume of the composition added to the beverage is 9.5 to 17 ml. In some aspects, the volume of the composition added to the beverage is 10 to 17 ml. In some aspects, the volume of the composition added to the beverage is 10.5 to 17 ml. In some aspects, the volume of the composition added to the beverage is 11 to 17 ml. In some aspects, the volume of the composition added to the beverage is 11.5 to 17 ml. In some aspects, the volume of the composition added to the beverage is 12 to 17 ml. In some aspects, the volume of the composition added to the beverage is 12.5 to 17 ml. In some aspects, the volume of the composition added to the beverage is 13 to 17 ml. In some aspects, the volume of the composition added to the beverage is 13.5 to 17 ml. In some aspects, the volume of the composition added to the beverage is 14 to 17 ml. In some aspects, the volume of the composition added to the beverage is 14.5 to 17 ml. In some aspects, the volume of the composition added to the beverage is 15 to 17 ml. In some aspects, the volume of the composition added to the beverage is 15.5 to 17 ml. In some aspects, the volume of the composition added to the beverage is 16 to 17 ml. In some aspects, the volume of the composition added to the beverage is 16.5 to 17 ml.

In some aspects, the volume of the composition added to the beverage is 1.5 ml. In some aspects, the volume of the composition added to the beverage is 2 ml. In some aspects, the volume of the composition added to the beverage is 2.5 ml. In some aspects, the volume of the composition added to the beverage is 3 ml. In some aspects, the volume of the composition added to the beverage is 3.5 ml. In some aspects, the volume of the composition added to the beverage is 4 ml. In some aspects, the volume of the composition added to the beverage is 4.5 ml. In some aspects, the volume of the composition added to the beverage is 5 ml. In some aspects, the volume of the composition added to the beverage is 5.5 ml. In some aspects, the volume of the composition added to the beverage is 6 ml. In some aspects, the volume of the composition added to the beverage is 6.5 ml. In some aspects, the volume of the composition added to the beverage is 7 ml. In some aspects, the volume of the composition added to the beverage is 7.5 ml. In some aspects, the volume of the composition added to the beverage is 8 ml. In some aspects, the volume of the composition added to the beverage is 8.5 ml. In some aspects, the volume of the composition added to the beverage is 9 ml. In some aspects, the volume of the composition added to the beverage is 9.5 ml. In some aspects, the volume of the composition added to the beverage is 10 ml. In some aspects, the volume of the composition added to the beverage is 10.5 ml. In some aspects, the volume of the composition added to the beverage is 11 ml. In some aspects, the volume of the composition added to the beverage is 11.5 ml. In some aspects, the volume of the composition added to the beverage is 12 ml. In some aspects, the volume of the composition added to the beverage is 12.5 ml. In some aspects, the volume of the composition added to the beverage is 13 ml. In some aspects, the volume of the composition added to the beverage is 13.5 ml. In some aspects, the volume of the composition added to the beverage is 14 ml. In some aspects, the volume of the composition added to the beverage is 14.5 ml. In some aspects, the volume of the composition added to the beverage is 15 ml. In some aspects, the volume of the composition added to the beverage is 15.5 ml. In some aspects, the volume of the composition added to the beverage is 16 ml. In some aspects, the volume of the composition added to the beverage is 16.5 ml. In some aspects, the volume of the composition added to the beverage is 17 ml.

In some aspects, the composition is diluted 300 to 5000 fold when added to the beverage.

In some aspects, the composition further comprises 1 to 5% w/w glycosylated steviol glycoside. In some aspects, the composition further comprises 1 to 4% w/w glycosylated steviol glycoside. In some aspects, the composition further comprises 1 to 3% w/w glycosylated steviol glycoside. In some aspects, the composition further comprises 1 to 2% w/w glycosylated steviol glycoside.

In some aspects, the composition further comprises 2 to 5% w/w glycosylated steviol glycoside. In some aspects, the composition further comprises 3 to 5% w/w glycosylated steviol glycoside. In some aspects, the composition further comprises 4 to 5% w/w glycosylated steviol glycoside.

In some aspects, the amount of glycosylated steviol glycoside in the composition is from 2 to 3% w/w.

In some aspects, the amount of glycosylated steviol glycoside in the composition is 2, or 2.5, or 3% w/w.

In some aspects, the amount of glycosylated steviol glycoside in the composition is from 2 to 3% w/w.

In some aspects, where the beverage is a beer, the glycosylated steviol glycoside stabilizes the foam of the beer. In some aspects, the glycosylated steviol glycoside reduces the amount of sucrose that may be added to the composition. In some aspects, the glycosylated steviol glycoside removes the requirement for sucrose in the composition.

In some aspects, the composition further comprises water in an amount sufficient to solubilize the glycosylated steviol glycoside.

The amount of water in the composition is from 0 to 30% w/w. In some aspects, the amount of water in the composition is from 0 to 25% w/w. In some aspects, the amount of water in the composition is from 0 to 20% w/w. In some aspects, the amount of water in the composition is from 0 to 15% w/w. In some aspects, the amount of water in the composition is from 0 to 10% w/w. In some aspects, the amount of water in the composition is from 0 to 5% w/w. In some aspects, the amount of water in the composition is from 0 to 4% w/w. In some aspects, the amount of water in the composition is from 0 to 3% w/w. In some aspects, the amount of water in the composition is from 0 to 2% w/w. In some aspects, the amount of water in the composition is from 0 to 1% w/w.

The amount of water in the composition is from 0 to 30% w/w. In some aspects, the amount of water in the composition is from 1 to 30% w/w. In some aspects, the amount of water in the composition is from 2 to 30% w/w. In some aspects, the amount of water in the composition is from 3 to 30% w/w. In some aspects, the amount of water in the composition is from 4 to 30% w/w. In some aspects, the amount of water in the composition is from 5 to 30% w/w. In some aspects, the amount of water in the composition is from 10 to 30% w/w. In some aspects, the amount of water in the composition is from 15 to 30% w/w. In some aspects, the amount of water in the composition is from 20 to 30% w/w. In some aspects, the amount of water in the composition is from 25 to 30% w/w.

In some aspects, the amount of water in the composition is from 7 to 10% w/w.

In some aspects, the amount of water in the composition is 7, or 8, or 9, or 10% w/w.

In some aspects, the composition further comprises 0 to 1.5% w/w sucralose. In some aspects, the composition further comprises 0 to 1% w/w sucralose. In some aspects, the composition further comprises 0 to 0.5% w/w sucralose. In some aspects, the composition further comprises 0 to 0.4% w/w sucralose. In some aspects, the composition further comprises 0 to 0.3% w/w sucralose. In some aspects, the composition further comprises 0 to 0.2% w/w sucralose. In some aspects, the composition further comprises 0 to 0.1% w/w sucralose.

In some aspects, the composition further comprises 0.1 to 1.5% w/w sucralose. In some aspects, the composition further comprises 0.2 to 1.5% w/w sucralose. In some aspects, the composition further comprises 0.3 to 1.5% w/w sucralose. In some aspects, the composition further comprises 0.4 to 1.5% w/w sucralose. In some aspects, the composition further comprises 0.5 to 1.5% w/w sucralose. In some aspects, the composition further comprises 1 to 1.5% w/w sucralose.

In some aspects, the composition further comprises a colorant. One of ordinary skill in the art may readily select a colorant suitable for use in the compositions disclosed herein.

Examples 1 through Example 5 describe compositions according to some aspects described herein.

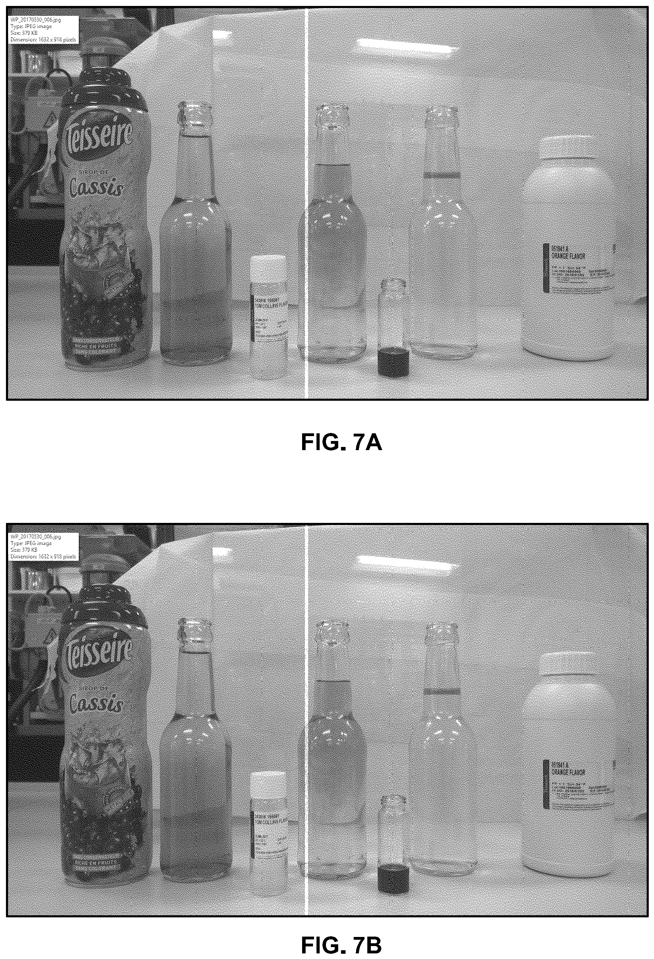

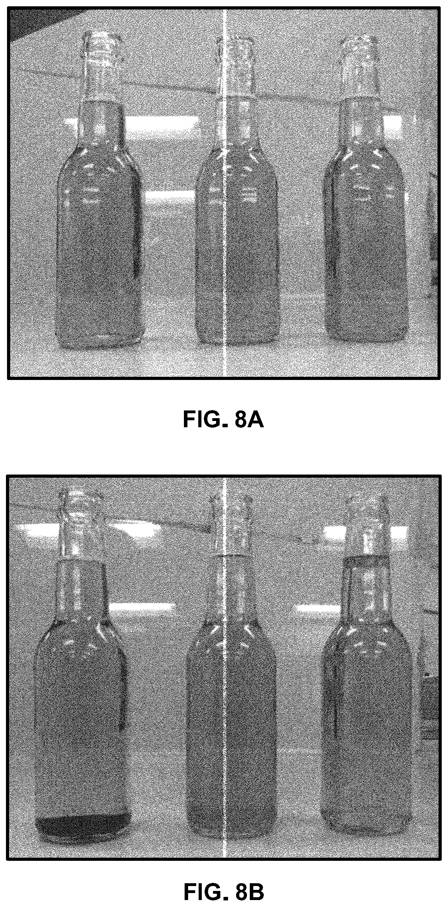

Referring to Figures 7 and 8 and Examples 7 and 8, the compositions disclosed herein are rapidly and evenly dispersed into the beverage without agitation. In some aspects, dispersion without agitation may be preferable, as agitation may result in undesirable foaming.

In some aspects, the compositions disclosed herein are rapidly and evenly dispersed into the beverage in 5 minutes or less. In some aspects, the compositions disclosed herein are rapidly and evenly dispersed into the beverage in 5, or 4, or 3, or 2, or 1 minute. In some aspects, the compositions disclosed herein are rapidly and evenly dispersed into the beverage in 60, or 50, or 40, or 30, or 20, or 10, or 5, or 3, or 2, or 1 second.

Again, referring to Figures 7 and 8 and Examples 7 and 8, the compositions disclosed herein form no sediments and/ or second phase. Examples of a second phase include, but are not limited to a second layer of the composition, dispersed within, on top of, or on the bottom of the beverage, or an emulsion.

In some aspects, the concentration of propylene glycol, when added to the beverage, does not exceed 1000 ppm. In some aspects, the concentration of propylene glycol, when added to the beverage, does not exceed 900, or 800, or 700, or 600, or 500, or 400, or 300, or 200, or 100, or 50, or 40, or 30, or 20, or 10 ppm.

In some aspects, the amount, and/ or choice of a particular component of the solvent system may vary. Factors influencing the amount, and/ or choice may include, but are not limited to: whether or not the beverage is an "alcohol-free" beverage, the flavoring substance, the final ethanol concentration of the beverage, and the like.

By way of illustration, referring to Example 1 through 5 and Table 1 below, the components of the solvent system may vary considerably, wherein water may be excluded from the composition.

Table 1: Components of the Solvent System in Various Compositions Described Herein

| Component | $\delta_p$ | $\delta_h$ | Example 1 | Example 2 | Example 3 | Example 4 | Example 5 |
|---|---|---|---|---|---|---|---|
| Water | 16 | 42.3 | 7 | | 10 | 10 | 10 |
| Glycerol | 12.1 | 29.3 | 27.8 | 20 | 25 | 33 | 25 |
| Ethanol | 8.8 | 19.4 | 41.18 | 31.26 | 42.02 | 36.8 | 32.1 |
| Propylene glycol | 9.4 | 23.3 | 20 | 35.2 | 18 | 17 | 18 |
| glycosylated steviol glycoside | 14.1 | 40.1 | 2 | 2.8 | 2 | | 2 |
| Sucralose | 16.2 | 34.8 | | | | 1.1 | |
| Equivalent sucrose | | | 300 | 420 | 300 | 660 | 300 |

*The Flavoring Substance:* As used herein, the term "flavoring substance" refers to an additive that imparts a particular taste to a beverage. The additive may be a single ingredient, or, alternatively, at least one ingredient. Tastes imparted to the beverage are: malt, coffee, chocolate, pineapple, coconut, mint, citrus, and savory flavors.

The flavoring substance may comprise at least one ingredient. In some aspects, the flavoring substance is selected according to its Hansen solubility parameters. The flavoring substance is selected according to its $\delta_p$ and $\delta_n$ values, wherein the $\delta_p$ and $\delta_h$ values are defined by the following coordinates in the graph shown in Figure 1: A(6,0), B(0,6), C(5, 20) and D(12,15).

In some aspects, the at least one ingredient of the flavoring substance is selected according to its Hansen solubility parameters. In some aspects, the at least one ingredient of the flavoring substance is selected according to its $\delta_p$ and $\delta_h$ values, wherein the $\delta_p$ and $\delta_h$ values are defined by the following coordinates in the graph shown in Figure 1: A(6,0), B(0,6), C(5, 20) and D(12,15).

Referring to Figures 2 to 6, (showing the Hansen solubility parameters for the components of compositions according to certain aspects presented herein) the Hansen space for the flavoring substance is separate from the Hansen space for the water solvent of the beverage. Consequently, the flavoring substance is less likely to dissolve in the water. However, the Hansen space for the flavoring substance is close to the Hansen space for Ethanol.

Without intending to be limited to any particular theory, the alcohol component of the solvent system solubilizes the flavoring substance, and the glycerol/ propylene glycol component of the solvent system ensures that the solubilized flavoring substance remains solubilized in the water solvent of the beverage. Referring to Figures 2 to 6, the Hansen space of the combined solvent system and flavoring substance of the compositions disclosed herein is closer to the Hansen space for the water solvent of the beverage. Consequently, the flavoring substance is more likely to dissolve in the water.

In some aspects, the density of the composition is equivalent to the density of water. In some aspects, the density of the composition is equivalent to the density of the beverage. In some aspects, the density of the composition, when measured at 20 degrees Celsius using a DA-100M Mettler Toledo densitometer is from 0.978 to 0.985 g/cm$^3$.

In some aspects, the density of the composition may be adjusted or defined by the the addition of a sufficient amount of propylene glycol.

The amount of the flavoring substance in the composition is from 0.5 to 15% w/w. In some aspects, the amount of the flavoring substance in the composition is from 0.5 to 14.5% w/w. In some aspects, the amount of the flavoring substance in the composition is from 0.5 to 14% w/w. In some aspects, the amount of the flavoring substance in the composition is from 0.5 to 13.5% w/w. In some aspects, the amount of the flavoring substance in the composition is from 0.5 to 13% w/w. In some aspects, the amount of the flavoring substance in the composition is from 0.5 to 12.5% w/w. In some aspects, the amount of the flavoring substance in the composition is from 0.5 to 12% w/w. In some aspects, the amount of the flavoring substance in the composition is from 0.5 to 11.5% w/w. In some aspects, the amount of the flavoring substance in the composition is from 0.5 to 11% w/w. In some aspects, the amount of the flavoring substance in the composition is from 0.5 to 10.5% w/w. In some aspects, the amount of the flavoring substance in the composition is from 0.5 to 10% w/w. In some aspects, the amount of the flavoring substance in the composition is from 0.5 to 9.5% w/w. In some aspects, the amount of the flavoring substance in the composition is from 0.5 to 9% w/w. In some aspects, the amount of the flavoring substance in the composition is from 0.5 to 8.5% w/w. In some aspects, the amount of the flavoring substance in the composition is from 0.5 to 8% w/w. In some aspects, the amount of the flavoring substance in the composition is from 0.5 to 7.5% w/w. In some aspects, the amount of the flavoring substance in the composition is from 0.5 to 7% w/w. In some aspects, the amount of the flavoring substance in the composition is from 0.5 to 6.5% w/w. In some aspects, the amount of the flavoring substance in the composition is from 0.5 to 6% w/w. In some aspects, the amount of the flavoring substance in the composition is from 0.5 to 5.5% w/w. In some aspects, the amount of the flavoring substance in the composition is from 0.5 to 5% w/w. In some aspects, the amount of the flavoring substance in the composition is from 0.5 to 4.5% w/w. In some aspects, the amount of the flavoring substance in the composition is from 0.5 to 4% w/w. In some aspects, the amount of the flavoring substance in the composition is from 0.5 to 3.5% w/w. In some aspects, the amount of the flavoring substance in the composition is from 0.5 to 3% w/w. In some aspects, the amount of the flavoring substance in the composition is from 0.5 to 2.5% w/w. In some aspects, the amount of the flavoring substance in the composition is from 0.5 to 2% w/w. In some aspects, the amount of the flavoring substance in the composition is from 0.5 to 1.5% w/w. In some aspects, the amount of the flavoring substance in the composition is from 0.5 to 1% w/w.

In some aspects, the amount of the flavoring substance in the composition is from 1 to 15% w/w. In some aspects, the amount of the flavoring substance in the composition is from 1.5 to 15% w/w. In some aspects, the amount of the flavoring substance in the composition is from 2 to 15% w/w. In some aspects, the amount of the flavoring substance in the composition is from 2.5 to 15% w/w. In some aspects, the amount of the flavoring substance in the composition is from 3 to 15% w/w. In some aspects, the amount of the flavoring substance in the composition is from 3.5 to 15% w/w. In some aspects, the amount of the flavoring substance in the composition is from 4 to 15% w/w. In some aspects, the amount of the flavoring substance in the composition is from 4.5 to 15% w/w. In some aspects, the amount of the flavoring substance in the composition is from 5 to 15% w/w. In some aspects, the amount of the flavoring substance in the composition is from 5.5 to 15% w/w. In some aspects, the amount of the flavoring substance in the composition is from 6 to 15% w/w. In some aspects, the amount of the flavoring substance in the composition is from 6.5 to 15% w/w. In some aspects, the amount of the flavoring substance in the composition is from 7 to 15% w/w. In some aspects, the amount of the flavoring substance in the composition is from 7.5 to 15% w/w. In some aspects, the amount of the flavoring substance in the composition is from 8 to 15% w/w. In some aspects, the amount of the flavoring substance in the composition is from 8.5 to 15% w/w. In some aspects, the amount of the flavoring substance in the composition is from 9 to 15% w/w. In some aspects, the amount of the flavoring substance in the composition is from 9.5 to 15% w/w. In some aspects, the amount of the flavoring substance in the composition is from 10 to 15% w/w. In some aspects, the amount of the flavoring substance in the composition is from 10.5 to 15% w/w. In some aspects, the amount of the flavoring substance in the composition is from 11 to 15% w/w. In some aspects, the amount of the flavoring substance in the composition is from 11.5 to 15% w/w. In some aspects, the amount of the flavoring substance in the composition is from 12 to 15% w/w. In some aspects, the amount of the flavoring substance in the composition is from 12.5 to 15% w/w. In some aspects, the amount of the flavoring substance in the composition is from 13 to 15% w/w. In some aspects, the amount of the flavoring substance in the composition is from 13.5 to 15% w/w. In some aspects, the amount of the flavoring substance in the composition is from 14 to 15% w/w. In some aspects, the amount of the flavoring substance in the composition is from 14.5 to 15% w/w.

In some aspects, the amount of the flavoring substance in the composition is 0.5, or 1, or 0.5, or 1, or 1.5, or 2, or 2.5, or 3, or 3.5, or 4, or 4.5, or 5, or 5.5, or 6, or 6.5, or 7, or 7.5, or 8, or 8.5, or 9, or 9.5, or 10, or 10.5, or 11, or 11.5, or 12, or 12.5, or 13, or 13.5, or 14, or 14.5, or 15% w/w.

In some aspects, the flavoring substance may further comprise an additional ingredient, such as, for example, cooling compounds, vitamins, minerals, herbs, stimulants, and the like.

Tables 2 to 6 below describe non-limiting examples of flavoring substances suitable for use in the compositions described herein.

Table 2: Flavoring Substance Described in Example 1

| Ingredient | $\delta_p$ | $\delta_h$ | Amount (w/w) | x $\delta_p$ | x $\delta_h$ |
|---|---|---|---|---|---|
| LIMONENE | 0.976 | 4.701198677 | 58.5 | 0.57096 | 2.750201226 |
| NEROL | 4.166 | 10.11235601 | 9 | 0.37494 | 0.910112041 |
| CITRAL | 2.895 | 6.794089343 | 9 | 0.26055 | 0.611468041 |
| $\alpha$ - TERPINEOL | 4.564 | 11.15219992 | 13.5 | 0.61614 | 1.505546989 |
| Vanillin | 9.904 | 13.16116556 | 10 | 0.9904 | 1.316116556 |

Table 3: Flavoring Substance Described in Example 2

| Ingredient | $\delta_p$ | $\delta_h$ | Amount (w/w) | x $\delta_p$ | x $\delta_h$ |
|---|---|---|---|---|---|
| LIMONENE | 0.976 | 4.701198677 | 65 | 0.6344 | 3.05577914 |
| NEROL | 4.166 | 10.11235601 | 10 | 0.4166 | 1.011235601 |
| CITRAL | 2.895 | 6.794089343 | 10 | 0.2895 | 0.679408934 |
| $\alpha$ - TERPINEOL | 4.564 | 11.15219992 | 15 | 0.6846 | 1.672829988 |

Table 4: Flavoring Substance Described in Example 3

| Ingredient | $\delta_p$ | $\delta_h$ | Amount (w/w) | x $\delta_p$ | x $\delta_h$ |
|---|---|---|---|---|---|
| ETHYLPRALINE | 13.118 | 16.13932514 | 13 | 1.70534 | 2.098112268 |
| ETHYLBUTYRATE | 4.135 | 5.478707786 | 13 | 0.53755 | 0.712232012 |
| PIPOL ACETATE | 3.078 | 6.609208198 | 13 | 0.40014 | 0.859197066 |
| FURANEOL | 15.614 | 16.63749392 | 13 | 2.02982 | 2.16287421 |
| $\alpha$ - UNDECALACTONE | 6.445 | 4.666517331 | 13 | 0.83785 | 0.606647253 |
| VANILLIN | 9.904 | 13.16116556 | 17.5 | 1.7332 | 2.303203974 |
| ETHYLVANILLIN | 8.768 | 12.38376082 | 17.5 | 1.5344 | 2.167158143 |

Table 5: Flavoring Substance Described in Example 4

| Ingredient | $\delta_p$ | $\delta_h$ | Amount (w/w) | x$\delta_p$ | x $\delta_h$ |
|---|---|---|---|---|---|
| LIMONENE | 0.976 | 4.701198677 | 58.5 | 0.57096 | 2.750201226 |
| NEROL | 4.166 | 10.11235601 | 9 | 0.37494 | 0.910112041 |
| CITRAL | 2.895 | 6.794089343 | 9 | 0.26055 | 0.611468041 |
| $\alpha$ - TERPINEOL | 4.564 | 11.15219992 | 13.5 | 0.61614 | 1.505546989 |

(continued)

| Ingredient | $\delta_p$ | $\delta_h$ | Amount (w/w) | x$\delta_p$ | x $\delta_h$ |
|---|---|---|---|---|---|
| Vanillin | 9.904 | 13.16116556 | 10 | 0.9904 | 1.316116556 |

Table 6: Flavoring Substance Described in Example 5

| Ingredient | $\delta_p$ | $\delta_h$ | Amount (w/w) | x $\delta_p$ | x $\delta_h$ |
|---|---|---|---|---|---|
| ETHYLPRALINE | 13.118 | 16.13932514 | 14 | 1.83652 | 2.25950552 |
| ETHYLBUTYRATE | 4.135 | 5.478707786 | 14 | 0.5789 | 0.76701909 |
| PIPOL ACETATE | 3.078 | 6.609208198 | 14 | 0.43092 | 0.925289148 |
| FURANEOL | 15.614 | 16.63749392 | 14 | 2.18596 | 2.329249149 |
| $\alpha$ - UNDECALACTONE | 6.445 | 4.666517331 | 14 | 0.9023 | 0.653312426 |
| LIMONENE | 0.976 | 4.701198677 | 19.5 | 0.19032 | 0.916733742 |
| NEROL | 4.166 | 10.11235601 | 3 | 0.12498 | 0.30337068 |
| CITRAL | 2.895 | 6.794089343 | 3 | 0.08685 | 0.20382268 |
| $\alpha$ - TERPINEOL | 4.564 | 11.15219992 | 4.5 | 0.20538 | 0.501848996 |

*Not according to the invention and present for illustration purpose only* is a kit, comprising a composition according to some aspects presented herein and a delivery system. The delivery system may be configured to contain an amount of the composition sufficient to flavor the beverage in a single serve container.

A system is provided wherein the system dispenses the composition according to any one of claims 1-12 into a liquid in a container, the system comprising:

a) a support structure;
b) a container holder for holding a container containing a liquid, the container holder being supported by the support structure;
c) a capsule containing the composition according to any one of claims 1-12;
d) a capsule holder for holding the capsule containing a composition according to some aspects presented herein; and
e) a manipulator device operable to manipulate the capsule to dispense the additive into the container.

Some aspects presented herein not part of the invention provide a system, wherein the system dispenses the composition according to some aspects presented herein into a bottled beverage, the system comprising:

a) a support structure;
b) a bottle holder for holding a bottle containing a beverage, the bottle holder being supported by the support structure;
c) a capsule containing the composition according to some aspects presented herein
d) a capsule holder for holding the capsule containing a composition according to some aspects presented herein; and
e) a manipulator device operable to manipulate the capsule to dispense the additive into the bottle.

In some aspects, the system is configured to allow a composition according to some aspects presented herein to be easily added to liquid in a container in a simple and effective manner.

In some aspects, the system, and/ or the compositions described herein allow any liquid or beverage, for example a bottled carbonated beverage such as beer, to be flavored or otherwise altered with an additive chosen by the consumer at the point of serve in a simple and effective manner. The consumer is, thus, able to choose from a wider variety of additives, including flavorings, than might previously have been available (for example in the form of pre-flavored bottled alcoholic beverages), thereby potentially making the beverage more appealing.

Without intending to be limited to any particular theory, from the view point of a beverage producer, the production process is simplified because, in the case of a beverage, the beverage no longer has to be flavored during production and stored in a bottle that requires specific labelling, etc. This means that a wider variety of flavorings and other additives can be offered to the consumer at the point of serve. Furthermore, if a certain additive, e.g. flavoring, proves to be unpopular, it is likely that only the unpopular additive and capsule in which it is contained (inexpensive components compared to the beverage) will not be consumed whilst the remainder of the beverage will be consumed in conjunction with more popular additives that are available at the point of serve. The level of consumption, and hence popularity, of different additives would also provide extremely useful feedback to the beverage producer, for example enabling them to develop new flavorings or other additives and to discontinue unpopular flavorings or other additives.

As used herein, the term "point of serve" refers to the location where a subject, such as a customer, or consumer either flavors a beverage, or receives a beverage that has been flavored according to certain aspects described herein. Consequently, "point of serve" refers to commercial and home-consumer applications.

The system, and in particular the support structure, may be dimensioned for location on a counter top. The system may, for example, be dimensioned to receive a bottled liquid having a volume of 330ml.

In some aspects, the manipulator device is manually operable by a user to manipulate the capsule to dispense the flavoring substance into the container. However, other aspects are contemplated in which the manipulator device is operated by a drive mechanism, for example a motorized drive.

The manipulator device may be a compression device operable to apply a compressive force to the capsule to rupture the capsule and thereby dispense the flavoring substance into the container.

In some aspects, the manipulator device may be a cutting device or a piercing device operable to penetrate the capsule, thereby enabling the flavoring substance to exit from the capsule into the container.

The capsule holder may be positioned above the container holder. In this configuration, the flavoring substance can be dispensed in a generally downward direction into the container.

In some aspects, the system may include a container opener which may be operable to engage a cap on the container and to remove the cap prior to manipulation of the capsule by the manipulator device, for example prior to compression of the capsule by the compression device. The container opener may be manually operable by a user. In some aspects, the provision of a container opener, integrated into the system, is advantageous because it avoids the need to remove the cap before inserting the container into the container holder.

In some aspects, the container opener may be configured to apply a removal force to the cap to remove it from the container. The container opener may be configured to apply a removal force to the cap to lever the cap off the container. The container opener is particularly suitable for use with crown caps which are commonly used with bottled beverages.

In some aspects, the system may be arranged so that a single operation, for example a single manual operation by a user, causes the application of the removal force by the container opener and thereafter the manipulation of the capsule by the manipulator device, for example the application of the compressive force by the compression device. Thus, the cap is removed and the flavoring substance is dispensed into the container by a single operation, thereby providing a quick and simple way of dispensing the flavoring substance into the liquid in the container.

In some aspects, the system may include a bin. The system may be arranged to eject the capsule from the manipulator device into the bin following dispensing of the flavoring substance from the capsule into the container. The system may be arranged to eject the compressed capsule from the compression device into the bin following dispensing of the flavoring substance from the capsule into the container. The system may be arranged to eject the cap into the bin following removal from the container.

In some aspects, the container holder may be rotatably mounted on the support structure, for example for movement between a first position and a second position. In some aspects, the container holder may be rotatably mounted on the support structure for movement between a first position in which the container is disposed at an angle to the vertical and a second position in which the container is disposed in a substantially vertical upright position. Alternatively, in some aspects, the container holder may be rotatably mounted on the support structure for movement between a first position in which the container is disposed in a substantially vertical upright position and a second position in which the container is disposed at an angle to the vertical.

In some aspects, the manipulator device may be arranged to manipulate the capsule to dispense the flavoring substance during movement of the container holder from the first position to the second position. The compression device may be arranged to apply the compressive force to the capsule to rupture the capsule during movement of the container holder from the first position to the second position.

In some aspects, the container opener may be arranged to remove the cap from the container during movement of the container holder from the first position to the second position. Accordingly, the single operation is provided by movement, for example movement by a user, of the container holder from the first position to the second position. Without intending to be limited to any particular theory, this provides a simple and effective way to remove the cap from a container and to dispense a desired flavoring substance into the container.

In some aspects, the container holder may be movable from the second position to the first position and the container containing the liquid and dispensed flavoring substance may be removable from the container holder when the container holder is in the first position.

In some aspects, the container holder may be formed in the support structure to hold a container in a substantially vertical upright position. The system may include an operating lever which may be movable, for example by a user, between a first position and a second position to engage the container opener with a cap fitted to the container. The container remains static in this embodiment and the system is operated upon movement of the operating lever, for example by a user.

In some aspects, the operating lever may be movable, for example by a user, from the second position to a third position and the container opener may be arranged to remove the cap from the container during movement of the operating lever from the second position to the third position.

In some aspects, the manipulator device may be arranged to manipulate the capsule to dispense the flavoring substance during movement of the operating lever from the second position to the third position. The compression device may be arranged to apply the compressive force to the capsule to rupture the capsule during movement of the operating lever from the second position to the third position. Accordingly, in some aspects, the single operation is provided by operation of the operating lever, and more particularly by movement of the operating lever, for example by a user, from the second position to the third position. Again, without intending to be limited to any particular theory, this provides a simple and effective way to remove the cap from a container and to dispense a desired flavoring substance into the container.

In some aspects, the operating lever may be biased for return movement from the third position to the first position. The container containing the liquid and dispensed flavoring substance may be removable from the container holder when the operating lever is in the first position.

The present invention is best illustrated but is not limited to the following examples.

## EXAMPLES

**Example 1: A Flavoring Substance Suitable for Use in Compositions According to Some Aspects Presented Herein**

A flavoring substance was created according to the recipe described in the table below:

| Ingredient | $\delta_p$ | $\delta_h$ | Amount (w/w) | x $\delta_p$ | x $\delta_h$ |
|---|---|---|---|---|---|
| LIMONENE | 0.976 | 4.701198677 | 58.5 | 0.57096 | 2.750201226 |
| NEROL | 4.166 | 10.11235601 | 9 | 0.37494 | 0.910112041 |
| CITRAL | 2.895 | 6.794089343 | 9 | 0.26055 | 0.611468041 |
| $\alpha$ - TERPINEOL | 4.564 | 11.15219992 | 13.5 | 0.61614 | 1.505546989 |
| Vanillin | 9.904 | 13.16116556 | 10 | 0.9904 | 1.316116556 |

**Example 2: A Flavoring Substance Suitable for Use in Compositions According to Some Aspects Presented Herein**

A flavoring substance was created according to the recipe described in the table below:

| Ingredient | $\delta_p$ | $\delta_h$ | **Amount** (w/w) | x $\delta_p$ | x $\delta_h$ |
|---|---|---|---|---|---|
| LIMONENE | 0.976 | 4.701198677 | 65 | 0.6344 | 3.05577914 |
| NEROL | 4.166 | 10.11235601 | 10 | 0.4166 | 1.011235601 |
| CITRAL | 2.895 | 6.794089343 | 10 | 0.2895 | 0.679408934 |
| $\alpha$ - TERPINEOL | 4.564 | 11.15219992 | 15 | 0.6846 | 1.672829988 |

**Example 3: A Flavoring Substance Suitable for Use in Compositions According to Some Aspects Presented Herein**

A flavoring substance was created according to the recipe described in the table below:

| Ingredient | $\delta_p$ | $\delta_h$ | Amount (w/w) | x $\delta_p$ | x $\delta_h$ |
|---|---|---|---|---|---|
| ETHYLPRALINE | 13.118 | 16.13932514 | 13 | 1.70534 | 2.098112268 |
| ETHYLBUTYRATE | 4.135 | 5.478707786 | 13 | 0.53755 | 0.712232012 |

(continued)

| Ingredient | $\delta_p$ | $\delta_h$ | Amount (w/w) | x $\delta_p$ | x $\delta_h$ |
|---|---|---|---|---|---|
| PIPOL ACETATE | 3.078 | 6.609208198 | 13 | 0.40014 | 0.859197066 |
| FURANEOL | 15.614 | 16.63749392 | 13 | 2.02982 | 2.16287421 |
| α - UNDECALACTONE | 6.445 | 4.666517331 | 13 | 0.83785 | 0.606647253 |
| VANILLIN | 9.904 | 13.16116556 | 17.5 | 1.7332 | 2.303203974 |
| ETHYLVANILLIN | 8.768 | 12.38376082 | 17.5 | 1.5344 | 2.167158143 |

**Example 4: A Flavoring Substance Suitable for Use in Compositions According to Some Aspects Presented Herein**

A flavoring substance was created according to the recipe described in the table below:

| Ingredient | $\delta_p$ | $\delta_h$ | Amount (w/w) | x$\delta_p$ | x $\delta_h$ |
|---|---|---|---|---|---|
| LIMONENE | 0.976 | 4.701198677 | 58.5 | 0.57096 | 2.750201226 |
| NEROL | 4.166 | 10.11235601 | 9 | 0.37494 | 0.910112041 |
| CITRAL | 2.895 | 6.794089343 | 9 | 0.26055 | 0.611468041 |
| α - TERPINEOL | 4.564 | 11.15219992 | 13.5 | 0.61614 | 1.505546989 |
| Vanillin | 9.904 | 13.16116556 | 10 | 0.9904 | 1.316116556 |

**Example 5: Compositions According to Some Aspects Presented Herein**

A flavoring substance was created according to the recipe described in the table below:

| Ingredient | $\delta_p$ | $\delta_h$ | Amount (w/w) | x $\delta_p$ | x $\delta_h$ |
|---|---|---|---|---|---|
| ETHYLPRALINE | 13.118 | 16.13932514 | 14 | 1.83652 | 2.25950552 |
| ETHYLBUTYRATE | 4.135 | 5.478707786 | 14 | 0.5789 | 0.76701909 |
| PIPOL ACETATE | 3.078 | 6.609208198 | 14 | 0.43092 | 0.925289148 |
| FURANEOL | 15.614 | 16.63749392 | 14 | 2.18596 | 2.329249149 |
| α - UNDECALACTONE | 6.445 | 4.666517331 | 14 | 0.9023 | 0.653312426 |
| LIMONENE | 0.976 | 4.701198677 | 19.5 | 0.19032 | 0.916733742 |
| NEROL | 4.166 | 10.11235601 | 3 | 0.12498 | 0.30337068 |
| CITRAL | 2.895 | 6.794089343 | 3 | 0.08685 | 0.20382268 |
| α - TERPINEOL | 4.564 | 11.15219992 | 4.5 | 0.20538 | 0.501848996 |

**Example 6: Compositions According to Some Aspects Presented Herein**

The table below describes the components of the solvent system used to create compositions according to some aspects presented herein that incorporate the flavor substances described in Examples 1 to 5.

| Component | $\delta_p$ | $\delta_h$ | Example 1 | Example 2 | Example 3 | Example 4 | Example 5 |
|---|---|---|---|---|---|---|---|
| Water | 16 | 42.3 | 7 | | 10 | 10 | 10 |
| Glycerol | 12.1 | 29.3 | 27.8 | 20 | 25 | 33 | 25 |
| Ethanol | 8.8 | 19.4 | 41.18 | 31.26 | 42.02 | 36.8 | 32.1 |
| Propylene glycol | 9.4 | 23.3 | 20 | 35.2 | 18 | 17 | 18 |

(continued)

| Component | $\delta_p$ | $\delta_h$ | Example 1 | Example 2 | Example 3 | Example 4 | Example 5 |
|---|---|---|---|---|---|---|---|
| glycosylated steviol glycoside | 14.1 | 40.1 | 2 | 2.8 | 2 | | 2 |
| Sucralose | 16.2 | 34.8 | | | | 1.1 | |
| Equivalent sucrose | | | 300 | 420 | 300 | 660 | 300 |

**Example 7: Addition of a Composition Described in Examples 5 and 6 in to a Beverage**

A composition containing the flavor substance described in Example 5 was created, by adding the flavor substance to a solvent system comprising: 10% w/w water, 25 w/w glycerol, 32.1% w/w ethanol, 18% w/w propylene glycol, and 2% w/w glycosylated steviol glycoside (see Table 1). 1.5 ml of the composition was added to a beverage in a 33 cl glass bottle. The density of the composition, measured at 20 degrees Celsius, using a DA-100M Mettler Toledo densitometer was 0.978 g/ cm$^3$. The dispersion of the composition immediately after addition can be seen in the middle glass bottle in Figure 7 a. For comparison, the dispersion of 1.5 ml of Cassis syrup (left bottle in Figure 7 a, having a density of 1.323 g/ cm$^3$), and 1.5 ml of orange flavor (right bottle in Figure 7 a, having a density of 0.851 g/ cm$^3$) were also observed. The bottles were not agitated after the flavoring substances were added.

The composition containing the flavor substance described in Example 5 formed a single phase solution that was observed to be more concentrated in the neck of the bottle. In contrast, the Cassis syrup formed a single phase solution that was observed to be more concentrated in the base of the bottle. The orange flavor formed a layer at the top of the beverage.

The composition containing the flavor substance described in Example 5 was uniformly distributed within the beverage, 5 minutes after addition. In contrast, the Cassis syrup formed a single phase solution that was observed to be more concentrated in the base of the bottle, and the orange flavor was still observed as a layer at the top of the beverage.

Taken together, these data demonstrate that compositions according to some aspects presented herein are capable of rapidly and uniformly distributing into a beverage without requiring agitation.

**Example 8: Addition of a Composition Described in Examples 1 and 6 in to Beer**

A composition containing the flavor substance described in Example 1 was created, by adding the flavor substance to a solvent system comprising: 10% w/w water, 25 w/w glycerol, 32.1% w/w ethanol, 18% w/w propylene glycol, and 2% w/w glycosylated steviol glycoside (see Table 1). The composition also contained 0.01% blue ariable color. 2.0 ml of the composition was added to a beer in a 33 cl glass bottle. The density of the composition, measured at 20 degrees Celsius, using a DA-100M Mettler Toledo densitometer was 1.0077 g/ cm$^3$. The alcohol content of the beer was reported at 5.2%. The dispersion of the composition immediately after addition can be seen in the middle glass bottle in Figure 8 a. For comparison, the dispersion of 2.0 ml of burnt caramel syrup (left bottle in Figure 8 a), and 2.0 ml of orange flavor (right bottle in Figure 8 a, having a density of 0.851 g/ cm$^3$) were also observed. The bottles were not agitated after the flavoring substances were added.

The composition containing the flavor substance described in Example 1 was uniformly distributed within the beverage, 1 minute after addition. In contrast, the burnt caramel syrup formed a single phase solution that was observed to be more concentrated in the base of the bottle, and the orange flavor was observed as a layer at the top of the beer. See Figure 8b.

Taken together, these data demonstrate that compositions according to some aspects presented herein are capable of rapidly and uniformly distributing into beer without requiring agitation.

**Claims**

1. A composition,

   wherein the composition is a liquid,
   wherein the composition is configured to disperse in a beverage without requiring agitation, the composition comprising:

   a) from 0 to 30% w/w water;
   b) from 15 to 40% w/w glycerol;
   c) from 10 to 40% w/w propylene glycol;
   d) from 30 to 50% w/w ethanol; and

e) from 0.5 to 15% w/w of a flavoring substance,

wherein the flavoring substance refers to an additive that imparts a particular taste to a beverage, wherein the taste is selected from the group consisting of malt, coffee, chocolate, pineapple, coconut, mint, citrus and savory flavors, and

wherein the flavoring substance is selected according to its $\delta_p$ and $\delta_h$ values, wherein the $\delta_p$ and $\delta_h$ values are defined by the following coordinates in the graph shown in Figure 1: A(6,0), B(0,6), C(5,20) and D(12,15),

wherein $\delta p$ and $\delta h$ are the Hansen solubility parameters, wherein $\delta p$ is the energy from dipolar intermolecular force between molecules and wherein $\delta h$ is the energy from hydrogen bonds between molecules.

2. The composition of claim 1, wherein the composition further comprises 1 to 5% w/w glycosylated steviol glycoside.

3. The composition of claim 2, wherein the amount of glycosylated steviol glycoside in the composition is from 2 to 3% w/w.

4. The composition of claim 1, wherein the composition further comprises 0 to 1.5% w/w sucralose.

5. The composition according to any of the preceding claims, wherein the amount of water in the composition is from 7 to 10% w/w.

6. The composition according to any of the preceding claims, wherein the amount of glycerol in the composition is from 20 to 35% w/w.

7. The composition according to any of the preceding claims, wherein the amount of propylene glycol in the composition is from 17 to 35% w/w.

8. The composition according to any of the preceding claims, wherein the amount of the alcohol in the composition is from 30 to 42% w/w.

9. The composition according to any of the preceding claims, wherein the beverage is in a single serve container, wherein the volume of the beverage is 33 cl or 50 cl and the volume of the composition added to the beverage is 0.5 to 17 mL.

10. The composition according to any of the preceding claims, wherein the concentration of propylene glycol, when added to the beverage, does not exceed 1000 ppm.

11. The composition according to any of the preceding claims, wherein the composition is packaged.

12. The composition of claim 11, wherein the composition is packaged in an amount sufficient to flavor the beverage in a single serve container.

13. A system,
wherein the system dispenses the composition according to any of the preceding claims into a liquid in a container, the system comprising:

a) a support structure;
b) a container holder for holding a container containing a liquid, the container holder being supported by the support structure;
c) a capsule containing the composition according to any of the preceding claims;
d) a capsule holder for holding the capsule containing a composition according to any of the preceding claims; and
e) a manipulator device operable to manipulate the capsule to dispense the additive into the container.

**Patentansprüche**

1. Zusammensetzung,

wobei die Zusammensetzung eine Flüssigkeit ist,
wobei die Zusammensetzung dafür gestaltet ist, in einem Getränk zu dispergieren, ohne Rühren zu benötigen,
wobei die Zusammensetzung umfasst:

a) von 0 bis 30 Gew.-% Wasser;
b) von 15 bis 40 Gew.-% Glycerol;
c) von 10 bis 40 Gew.-% Propylenglycol;
d) von 30 bis 50 Gew.-% Ethanol; und
e) von 0,5 bis 15 Gew.-% an einem Aromastoff,

wobei der Aromastoff einen Zusatzstoff bezeichnen, der einem Getränk einen bestimmten Geschmack verleiht,
wobei der Geschmack ausgewählt ist aus der Gruppe bestehend aus Malz, Kaffee, Schokolade, Ananas, Kokos, Minze, Citrus und pikanten Aromen, und
wobei der Aromastoff gemäß seinen $\delta_\rho$- und $\delta_h$-Werten ausgewählt ist, wobei die $\delta_\rho$-und $\delta_h$-Werte durch die folgenden Koordinaten in dem in Figur 1 gezeigten Diagramm definiert sind: A(6,0), B(0,6), C(5,20) und D(12,15), wobei $\delta\rho$ und $\delta h$ die Hansen-Löslichkeitsparameter sind, wobei $\delta\rho$ die Energie aus dipolarer intermolekularer Kraft zwischen Molekülen ist und wobei $\delta h$ die Energie aus Wasserstoffbrücken zwischen Molekülen ist.

2. Zusammensetzung nach Anspruch 1, wobei die Zusammensetzung ferner 1 bis 5 Gew.-% glycosyliertes Steviolglycosid umfasst.

3. Zusammensetzung nach Anspruch 2, wobei die Menge an glycosyliertem Steviolglycosid in der Zusammensetzung von 2 bis 3 Gew.-% beträgt.

4. Zusammensetzung nach Anspruch 1, wobei die Zusammensetzung ferner 0 bis 1,5 Gew.-% Sucralose umfasst.

5. Zusammensetzung nach einem der vorstehenden Ansprüche, wobei die Menge an Wasser in der Zusammensetzung von 7 bis 10 Gew.-% beträgt.

6. Zusammensetzung nach einem der vorstehenden Ansprüche, wobei die Menge an Glycerol in der Zusammensetzung von 20 bis 35 Gew.-% beträgt.

7. Zusammensetzung nach einem der vorstehenden Ansprüche, wobei die Menge an Propylenglycol in der Zusammensetzung von 17 bis 35 Gew.-% beträgt.

8. Zusammensetzung nach einem der vorstehenden Ansprüche, wobei die Menge des Alkohols in der Zusammensetzung von 30 bis 42 Gew.-% beträgt.

9. Zusammensetzung nach einem der vorstehenden Ansprüche, wobei sich das Getränk in einem Einzelportionsbehälter befindet, wobei das Volumen des Getränks 33 cl oder 50 cl beträgt und das Volumen der dem Getränk zugegebenen Zusammensetzung 0,5 bis 17 ml beträgt.

10. Zusammensetzung nach einem der vorstehenden Ansprüche, wobei die Konzentration von Propylenglycol, wenn dem Getränk zugegeben, 1000 ppm nicht übersteigt.

11. Zusammensetzung nach einem der vorstehenden Ansprüche, wobei die Zusammensetzung verpackt ist.

12. Zusammensetzung nach Anspruch 11, wobei die Zusammensetzung in einer Menge verpackt ist, die ausreicht, um das Getränk in einem Einzelportionsbehälter zu aromatisieren.

13. System,
wobei das System die Zusammensetzung nach einem der vorstehenden Ansprüche in eine Flüssigkeit in einem Behälter ausgibt, wobei das System umfasst:

a) eine Trägerstruktur;
b) einen Behälterhalter zum Halten eines Behälters, der eine Flüssigkeit enthält, wobei der Behälterhalter von der Trägerstruktur getragen wird;
c) eine Kapsel, die die Zusammensetzung nach einem der vorstehenden Ansprüche enthält;

d) einen Kapselhalter zum Halten der Kapsel, die eine Zusammensetzung nach einem der vorstehenden Ansprüche enthält; und

e) eine Manipulatorvorrichtung, die funktionsfähig ist, die Kapsel zu manipulieren, um den Zusatzstoff in den Behälter auszugeben.

**Revendications**

**1.** Composition,

dans laquelle la composition est un liquide,
dans laquelle la composition est configurée pour se disperser dans une boisson sans nécessiter d'agitation, la composition comprenant :

a) de 0 à 30 % p/p d'eau ;
b) de 15 à 40 % p/p de glycérol ;
c) de 10 à 40 % p/p de propylène glycol ;
d) de 30 à 50 % p/p d'éthanol ; et
e) de 0,5 à 15 % p/p d'une substance aromatisante,

dans laquelle la substance aromatisante fait référence à un additif qui confère un goût particulier à une boisson, le goût étant choisi dans le groupe constitué par le malt, le café, le chocolat, l'ananas, la noix de coco, la menthe, les agrumes et les saveurs savoureuses, et
dans laquelle la substance aromatisante est choisie selon ses valeurs $\delta_\rho$ et $\delta_h$, les valeurs de $\delta_p$ et $\delta_h$ étant définies par les coordonnées suivantes dans le graphique représenté sur la figure 1 : A(6,0), B(0,6), C(5,20) et D(12,15), dans laquelle $\delta\rho$ et $\delta h$ sont les paramètres de solubilité de Hansen, dans laquelle $\delta\rho$ est l'énergie de la force intermoléculaire dipolaire entre molécules et dans laquelle $\delta h$ est l'énergie de liaisons hydrogène entre molécules.

**2.** Composition selon la revendication 1, dans laquelle la composition comprend en outre 1 à 5 % p/p de glycoside de stéviol glycosylé.

**3.** Composition selon la revendication 2, dans laquelle la quantité de glycoside de stéviol glycosylé dans la composition est de 2 à 3 % p/p.

**4.** Composition selon la revendication 1, dans laquelle la composition comprend en outre 0 à 1,5 % p/p de sucralose.

**5.** Composition selon l'une quelconque des revendications précédentes, dans laquelle la quantité d'eau dans la composition est de 7 à 10 % p/p.

**6.** Composition selon l'une quelconque des revendications précédentes, dans laquelle la quantité de glycérol dans la composition est de 20 à 35 % p/p.

**7.** Composition selon l'une quelconque des revendications précédentes, dans laquelle la quantité de propylène glycol dans la composition est de 17 à 35 % p/p.

**8.** Composition selon l'une quelconque des revendications précédentes, dans laquelle la quantité de l'alcool dans la composition est de 30 à 42 % p/p.

**9.** Composition selon l'une quelconque des revendications précédentes, dans laquelle la boisson est dans un récipient à dose unique, dans laquelle le volume de la boisson est de 33 cl ou 50 cl et le volume de la composition ajoutée à la boisson est de 0,5 à 17 mL.

**10.** Composition selon l'une quelconque des revendications précédentes, dans laquelle la concentration de propylène glycol, lorsqu'il est ajouté à la boisson, ne dépasse pas 1 000 ppm.

**11.** Composition selon l'une quelconque des revendications précédentes, dans laquelle la composition est conditionnée.

**12.** Composition selon la revendication 11, dans laquelle la composition est conditionnée en une quantité suffisante pour aromatiser la boisson dans un récipient à dose unique.

**13.** Système,
dans lequel le système distribue la composition selon l'une quelconque des revendications précédentes dans un liquide dans un récipient, le système comportant :

    a) une structure de support ;
    b) un support de récipient pour maintenir un récipient contenant un liquide, le support de récipient étant supporté par la structure de support ;
    c) une capsule contenant la composition selon l'une quelconque des revendications précédentes ;
    d) un support de capsule pour maintenir la capsule contenant une composition selon l'une quelconque des revendications précédentes ; et
    e) un dispositif manipulateur permettant de manipuler la capsule pour distribuer l'additif dans le récipient.

**Solvent Systems**

O Hydrophilic solvents
● Hydrophobic solvents
◇ solvent systems
· flavor compounds

FIG. 1

FIG. 2

**FIG. 3**

FIG. 4

**weight % in formulation**

FIG. 5

**FIG. 6**

**FIG. 7A**

**FIG. 7B**

FIG. 8A

FIG. 8B